# DEMANDE DE BREVET EUROPEEN

(11) **EP 2 266 855 A1**
(43) Date de publication de la demande: **29.12.2010**
(21) Numéro de dépôt: 10305641.2
(22) Date de dépôt: 15.06.2010
(51) Int. Cl.: B60W 10/06, B60W 10/08, B60W 20/00, B60W 10/02, B60K 6/48

(54) **Motorisation hybride à dominante électrique destinée à un véhicule**

(30) Priorité: 16.06.2009 FR 0954012
(71) Demandeur: Zerbato, Thierry, 47190 Aiguillon (FR); Duclos, Pascal, 47400 Gontaud De Nogaret (FR)
(72) Inventeur: Zerbato, Thierry, 47190 Aiguillon (FR); Duclos, Pascal, 47400 Gontaud De Nogaret (FR)
(74) Mandataire: Fantin, Laurent

(57) **Abrégé**

L'objet de l'invention est une motorisation hybride à dominante électrique d'un véhicule comprenant un moteur électrique (10) avec un arbre de sortie (14) accouplé à une transmission (18) du véhicule et un moteur thermique (12) avec un arbre de sortie (16) relié grâce à une chaîne cinématique à ladite transmission (18), **caractérisée en ce qu**'elle comprend des moyens (28) d'embrayage et de débrayage placés au niveau de la chaîne cinématique reliant l'arbre de sortie (16) du moteur thermique à la transmission (18) aptes à occuper un premier état désaccouplé lorsque la vitesse du véhicule est inférieure à une vitesse seuil Vs de manière à ce que le moteur thermique (12) soit désaccouplé de la transmission (18) et un second état accouplé lorsque la vitesse du véhicule est égale ou supérieure à la vitesse seuil Vs de manière à ce que le moteur thermique (12) soit accouplé à la transmission.

## Description

La présente invention est relative à une motorisation hybride à dominante électrique destinée à un véhicule. Cette motorisation est plus particulièrement destinée à un véhicule urbain et interurbain, par exemple un véhicule destiné à livrer plusieurs villes avec des parcours de centre ville (urbain) et des trajets entre les villes (interurbain).

Ainsi, en zone urbaine et périurbaine, le véhicule électrique contribue efficacement à réduire la pollution de l'air engendrée par les rejets des véhicules à moteur à combustion de plus en plus nombreux.

Ensuite, les nuisances sonores issues des bruits des véhicules de type fourgonnette de livraison sont considérées comme très gênantes au quotidien, notamment en raison des heures de passage desdits véhicules de livraison.

Le véhicule électrique ne présente pas de nuisance sonore, ce qui est très appréciable pour les habitants des villes.

Comparativement à un véhicule à moteur thermique, le véhicule électrique est plus performant dans le cas des petits trajets répétitifs.

En effet, avec un véhicule thermique utilisé en « stop and go », c'est-à-dire sur des trajets courts entrecoupés d'arrêts prolongés, le moteur n'atteint jamais la température idéale pour fonctionner normalement.

Plus en détails, on observe une surconsommation de 50 à 80 % pour le 1^{er} kilomètre, de 25 à 50 % pour le 2^{ème} kilomètre, et enfin, à partir du 6^{ème} kilomètre, la consommation devient quasi-normale.

Le véhicule électrique se présente comme une solution beaucoup mieux adaptée à une utilisation en « stop and go » car il ne consomme pas d'énergie à l'arrêt, possède un rendement supérieur à 90 % quel que soit le régime moteur.

Donc, sur de petits trajets urbains, souvent encombrés, et parcourus en effectuant des arrêts fréquents et des manoeuvres répétitives, l'utilisation d'un véhicule à motorisation électrique est avantageuse.

Cependant, les véhicules à motorisation thermique demeurent intéressants pour les trajets interurbains, étant donné l'autonomie plus limitée des batteries nécessaires au fonctionnement des moteurs électriques.

Dans le cas d'une utilisation mixte, c'est-à-dire dans laquelle le véhicule doit être utilisé sur des trajets courts entrecoupés d'arrêts prolongés mais aussi sur des trajets plus longs de plusieurs kilomètres, il devient difficile de faire un choix entre une motorisation thermique et une motorisation électrique.

Afin de réduire la consommation en carburant des moteurs thermiques des véhicules, des motorisations hybrides ont été développées dans lesquelles un moteur électrique vient en complément du moteur thermique.

Afin de permettre une utilisation mixte, la plupart des motorisations hybrides de l'art antérieur intègrent un dispositif d'accouplement, comparable à une boîte de vitesses, permettant d'entraîner les roues du véhicule avec le moteur électrique et/ou le moteur thermique.

Généralement, un dispositif d'accouplement d'une motorisation hybride de l'art antérieur comprend un premier arbre d'entraînement couplé à un moteur électrique, un deuxième arbre d'entraînement couplé à un moteur thermique, et au moins un arbre principal susceptible d'être accouplé par des premiers, respectivement des deuxièmes, moyens de transmission au premier, respectivement au deuxième, arbre d'entraînement sous l'action de moyens de sélection pouvant prendre plusieurs positions.

Qu'ils soient à fonctionnement automatique ou manuel, les moyens de sélection et les premiers et deuxièmes moyens de transmission utilisés pour la réalisation des motorisations hybrides de l'art antérieur multiplient le nombre de pièces, notamment d'engrenages, les pertes d'énergie, les risques de défaillance de la motorisation, ainsi que le coût de réalisation de ces motorisations hybrides. Aussi, la présente invention vise à pallier les inconvénients de l'art antérieur en proposant une conception simplifiée d'une motorisation hybride permettant de profiter des avantages d'une motorisation électrique tout en s'affranchissant de ses limites en autonomie grâce à l'apport d'une motorisation thermique sans commande complexe, limitant le nombre de pièces de transmission.

A cet effet, l'invention a pour objet une motorisation hybride d'un véhicule comprenant un moteur électrique avec un arbre de sortie accouplé à une transmission du véhicule et un moteur thermique avec un arbre de sortie relié grâce à une chaîne cinématique à ladite transmission, caractérisée en ce qu'elle comprend des moyens d'embrayage et de débrayage placés au niveau de la chaîne cinématique reliant l'arbre de sortie du moteur thermique à la transmission aptes à occuper un premier état désaccouplé lorsque la vitesse du véhicule est inférieure à une vitesse seuil Vs de manière à ce que le moteur thermique soit désaccouplé de la transmission et un second état accouplé lorsque la vitesse du véhicule est égale ou supérieure à la vitesse seuil Vs de manière à ce que le moteur thermique soit accouplé à la transmission.

D'autres caractéristiques et avantages ressortiront de la description qui va suivre de l'invention, description donnée à titre d'exemple uniquement, en regard des dessins annexés sur lesquels :
- la figure 1 est un schéma d'une motorisation hybride selon l'invention,
- la figure 2 est un diagramme illustrant la vitesse du véhicule en fonction du temps, et
- la figure 3 est un schéma illustrant un mode de réalisation d'une commande de la motorisation hybride selon l'invention.

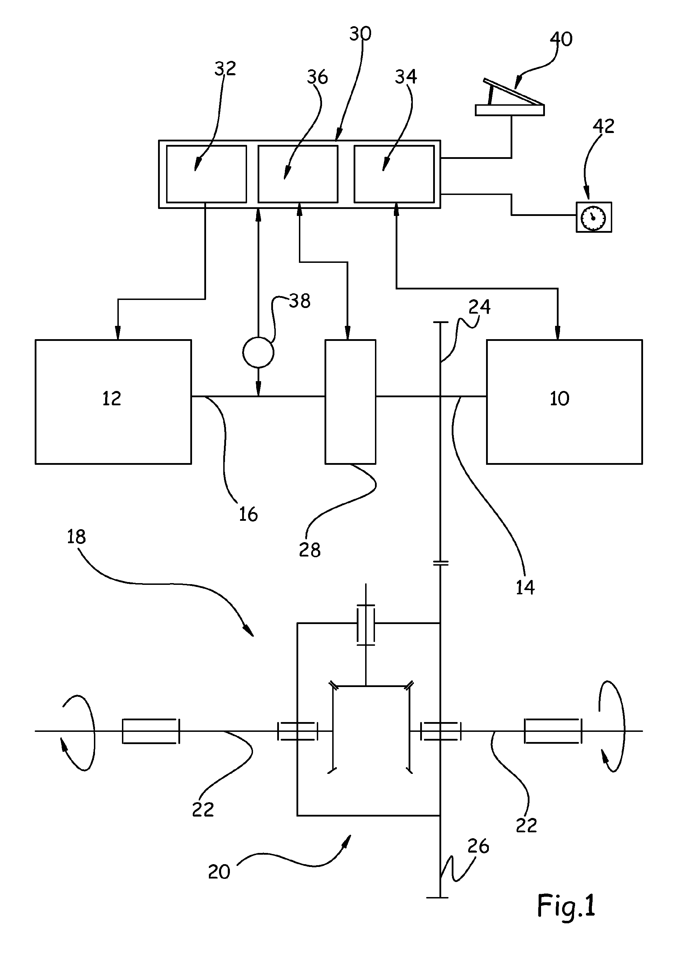

Sur la figure 1, on a représenté schématiquement une motorisation hybride selon l'invention équipant un véhicule. De manière connue, le véhicule comprend des moyens de mesure de sa vitesse réelle.

Cette motorisation hybride comprend au moins un moteur électrique 10, au moins un moteur thermique 12, un arbre 14 de sortie du moteur électrique, un arbre 16 de sortie du moteur thermique 12.

Ladite motorisation hybride assure par l'intermédiaire d'une transmission 18 la mise en rotation d'au moins une roue, non représentée.

Selon un mode de réalisation illustré sur la figure 1, la transmission 18 peut comprendre un différentiel 20 avec des arbres de sortie accouplés aux roues par l'intermédiaire de cardans 22. D'autres solutions peuvent être envisagées pour la transmission 18. Par conséquent, elle n'est pas plus détaillée car elle est connue de l'homme du métier.

L'arbre 14 de sortie du moteur électrique est couplé de manière permanente à la transmission 18. Selon un mode de réalisation, l'arbre de sortie 14 du moteur électrique ou un arbre accouplé audit arbre de sortie 14 supporte un premier engrenage 24 qui engrène avec un second engrenage 26 relié à la transmission 18. Selon une caractéristique importante de l'invention, l'arbre 16 de sortie du moteur thermique est couplé de manière non permanente à la transmission 18.

A cet effet, la motorisation comprend des moyens 28 d'embrayage et de débrayage placés au niveau de la chaîne cinématique qui va de l'arbre 16 de sortie du moteur thermique à la transmission 18.

Selon un mode de réalisation préféré, l'arbre 16 de sortie du moteur thermique est accouplé à l'entrée des moyens 28 d'embrayage et de débrayage et la sortie des moyens 28 d'embrayage et de débrayage est accouplée à l'arbre 14 du moteur électrique.

A titre d'exemple, les moyens 28 d'embrayage et de débrayage peuvent être un embrayage à disques. Toutefois, l'invention n'est pas limitée à cette solution. Par conséquent, les moyens 28 d'embrayage et de débrayage ne sont pas plus décrits car ils sont connus de l'homme du métier et peuvent prendre différentes configurations.

Selon une caractéristique importante du fonctionnement de la motorisation hybride selon l'invention, les moyens 28 d'embrayage et de débrayage sont à l'état désaccouplé tant que la vitesse du véhicule V ne dépasse pas une certaine vitesse seuil Vs et sont à l'état accouplé lorsque la vitesse du véhicule V atteint ou dépasse la vitesse seuil Vs.

Pour un véhicule urbain et interurbain, la vitesse seuil Vs peut être par exemple supérieure à 50 Km/h.

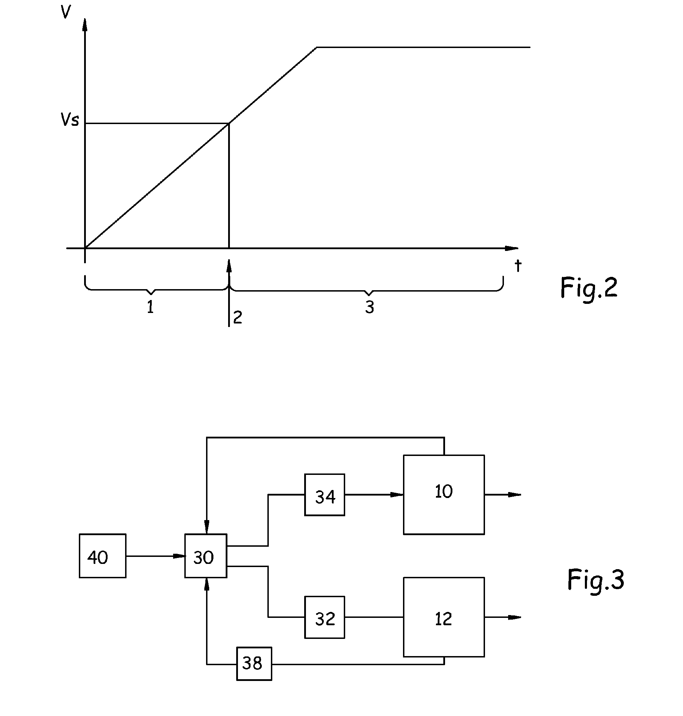

Ainsi, comme illustré sur la figure 2, lorsque la vitesse du véhicule V est inférieure à Vs (phase 1), seul le moteur électrique est accouplé à la transmission. Dès que la vitesse du véhicule V est sensiblement égale à Vs (phase 2) alors les moyens 28 d'embrayage et de débrayage changent d'état. Ainsi, lorsque la vitesse du véhicule V est supérieure ou égale à Vs (phase 3), le moteur électrique et le moteur thermique sont accouplés à la transmission. Cette solution permet d'optimiser le fonctionnement des deux moteurs électrique et thermique et permet de s'affranchir de l'utilisation d'une boîte de vitesse pour le moteur thermique.

En effet, un moteur thermique a une plage de fonctionnement en vitesse réduite. Ainsi, un moteur thermique doit être accouplé à une boîte de vitesse avec des rapports de vitesse étagés pour adapter le rapport de transmission entre le moteur thermique et la roue du véhicule en fonction de la vitesse du véhicule pour que le moteur thermique fonctionne dans une plage de régime du moteur optimale.

Selon l'invention, le moteur thermique est accouplé à une roue uniquement sur une plage de vitesse du véhicule adaptée à la plage de fonctionnement optimale du moteur thermique, Vs étant la vitesse du véhicule correspondant à la limite inférieure de la plage de fonctionnement du moteur thermique. Ainsi, il n'est pas nécessaire de prévoir une boîte de vitesse dans la mesure où le moteur thermique n'est pas accouplé avec la transmission 18 lorsque la vitesse du véhicule est inférieure à la vitesse seuil. Selon l'invention, le moteur électrique qui peut fonctionner avec un rendement proche de 1 sur une plage de vitesse large de l'ordre de 0 à 6000 t/min, assure l'accroissement de la vitesse du véhicule jusqu'à la vitesse seuil ce qui permet de ne pas avoir une boîte de vitesse.

Selon un autre aspect de l'invention, le moteur thermique vient en complément du moteur électrique et non le contraire comme dans les motorisations hybrides existantes, c'est pourquoi nous parlons de motorisation hybride à dominante électrique.

Pour limiter la phase de glissement des organes d'accouplement des moyens 28 d'embrayage et de débrayage et ainsi assurer la longévité desdits moyens 28 d'embrayage et de débrayage et/ou réduire leur dimensionnement, le changement d'état des moyens 28 intervient lorsque la vitesse de rotation de l'entrée des moyens 28 d'embrayage et de débrayage proportionnelle ou égale à la vitesse de rotation du moteur thermique Wmt est sensiblement égale à la vitesse de rotation de la sortie des moyens 28 d'embrayage et de débrayage proportionnelle ou égale à la vitesse de rotation de la transmission 18 elle-même proportionnelle à la vitesse de rotation du moteur électrique Wme. Ainsi, les moyens 28 d'embrayage et de débrayage changent d'état lorsque Wmt=K*Wme. A cet effet, la motorisation comprend des moyens 30 de supervision permettant de coordonner le fonctionnent des moteurs thermique et électrique avec des moyens 32 de commande du moteur thermique, des moyens 34 de commande du moteur électrique et des moyens 36 de commande des moyens 28 d'embrayage et de débrayage.

Selon un autre point de l'invention, la motorisation hybride comprend des moyens 38 de mesure de la vitesse de rotation réelle de l'arbre de sortie 16 du moteur thermique pour renseigner les moyens 30 de supervision. La présence des moyens 38 de mesure permettent d'utiliser un moteur thermique déjà connu n'incorporant pas une électronique sophistiquée pour le piloter mais des commandes classiques comme par exemple une commande de d'admission. Avantageusement, le moteur électrique 10 est un moteur de type sans balai, tel qu'un moteur asynchrone ou synchrone à aimants permanents.

Les moyens 34 de commande du moteur électrique, reliés à des moyens d'alimentation en énergie électrique, permettent de piloter le fonctionnement dudit moteur électrique 10 pour régler la vitesse de son arbre de sortie 14. L'utilisation d'un moteur électrique 10 sans balai est particulièrement intéressante car il s'agit d'une machine électrique ne présentant pas de pièces de connexion, et donc de frottements, entre le rotor et le stator.

Ainsi, lorsqu'il n'est plus alimenté, le moteur électrique 10 autorise un fonctionnement purement thermique de ladite motorisation hybride, c'est-à-dire un entraînement de la transmission 18 uniquement par le moteur thermique 12. Selon des variantes de réalisation de l'invention, les moyens 30 de supervision peuvent prendre différentes formes.

Par exemple, ces moyens de supervision 30 peuvent consister en : une seule carte électronique indépendante, un logiciel de supervision ( ordre de marche ou d'arrêt, consigne d'accélération, de couple ou de vitesse, ... ) du moteur thermique intégré aux moyens 34 de commande du moteur électrique, notamment un variateur de vitesse électronique, ou un logiciel de supervision du moteur électrique 10 intégré aux moyens 32 de commande du moteur thermique, ...

De préférence, ces moyens 30 de supervision permettent de gérer les couples d'entraînement transmis par le moteur électrique 10, respectivement le moteur thermique 12, à l'arbre de sortie 14, respectivement à l'arbre de sortie 16 selon une loi de commande fonction d'au moins un paramètre d'utilisation du véhicule, tel que la consigne d'accélération ou la vitesse souhaitée par l'utilisateur.

Selon une première variante, la motorisation hybride est pilotée en vitesse, les moyens 30 de supervision utilisant une mesure de la vitesse du véhicule pour ajuster le couple électrique, respectivement le couple thermique, fourni par le moteur électrique 10, respectivement le moteur thermique 12.

Selon une deuxième variante, la motorisation hybride est pilotée en couple sur la base d'une consigne d'accélération, les moyens de commande en couple du moteur électrique 10, respectivement du moteur thermique 12, faisant varier la vitesse du véhicule, ladite variation de vitesse étant fonction des couples appliqués et de l'inertie du véhicule.

Afin de permettre la conduite du véhicule, lesdits moyens 30 de supervision sont reliés à un indicateur de vitesse 42 ainsi qu'à des moyens 40 actionnables par l'utilisateur, tel une pédale d'accélération analogique et un commutateur d'indication du sens de marche (avant/arrière) par exemple.

Ladite loi de commande est prédéfinie par le constructeur ou par un dispositif approprié fourni à l'utilisateur pour adapter la gestion desdits moteurs (10,12) à au moins un paramètre d'utilisation du véhicule tel la consigne d'accélération.

De plus, grâce aux moyens 30 de supervision, l'utilisateur n'a pas à se préoccuper du choix entre le mode de fonctionnement électrique, électrique/thermique ou thermique de la motorisation hybride, ce choix étant défini par la loi de commande et automatiquement géré par lesdits moyens 30 de supervision.

La loi de commande définit la stratégie d'utilisation du véhicule en favorisant l'utilisation du moteur thermique 12 sur une plage de fonctionnement optimale ne nécessitant pas l'usage d'une boîte de vitesse.

De préférence, la loi de commande permet également une utilisation des moteurs visant à économiser l'énergie électrique. A cet effet, lorsque la vitesse du véhicule dépasse une vitesse haute Vh, le moteur électrique n'est plus alimenté et la transmission est entraînée uniquement par le moteur thermique. La conception du moteur électrique permet à ce dernier d'être toujours accouplé à la transmission même s'il n'est pas alimenté.

A titre d'exemple, dans le cas d'une loi de commande prédéfinie en fonction de la vitesse du véhicule :
- entre 0 et Vs km/h, la motorisation hybride fonctionne en mode électrique seul,
- à partir de Vs, les moyens 28 d'embrayage et débrayage changent d'état et le moteur thermique est accouplé à la transmission
- entre Vs et Vh km/h, la motorisation hybride fonctionne en mode mixte électrique/thermique, l'utilisation du moteur électrique étant progressivement stoppée tandis que l'utilisation du moteur thermique augmente,
- à plus de Vh km/h, la motorisation hybride fonctionne en mode thermique.

Lorsque l'opérateur décide de faire bouger le véhicule vers l'arrière, seul le moteur électrique est accouplé, les moyens 28 d'embrayage et débrayage étant à l'état désaccouplé.

Selon une loi de commande, on prévoit que le moteur thermique soit à l'arrêt lorsque la vitesse du véhicule est inférieure à une vitesse minimale Vmin (inférieure à Vs) et qu'il ne soit démarré que lorsque la vitesse du véhicule est supérieure à Vmin.

Dans un mode de réalisation préféré de l'invention et illustré sur la figure 3, les moyens 30 de supervision reçoivent la consigne d'accélération de la pédale d'accélérateur 40 et le sens de marche souhaité.

Ces moyens 30, connaissant la vitesse instantanée du véhicule et d'autres paramètres liés à la stratégie d'utilisation définie par la loi de commande, transmettent en direction du moteur une consigne d'accélération aux moyens de commande 32 de pilotage du moteur thermique 12 et éventuellement un ordre de marche ou d'arrêt, en direction du moteur électrique une consigne d'accélération aux moyens de commande 34 du moteur électrique et éventuellement un ordre d'arrêt et en direction des moyens 28 d'embrayage et débrayage une consigne d'état.

Lors de la phase 1, les moyens de commande 30 reçoivent la consigne d'accélération et en fonction de la vitesse du véhicule ajustent la consigne d'accélération transmise aux moyens 34 de commande du moteur électrique pour obtenir une vitesse de l'arbre de sortie 14 du moteur électrique conforme à l'accélération souhaitée par l'utilisateur.

Lorsque la vitesse du véhicule atteint la vitesse Vs, phase 2, les moyens de mesure 38 indiquent la vitesse de rotation de l'arbre de sortie 16 du moteur thermique. Les moyens 30 de supervision transmettent alors une consigne d'accélération aux moyens de commande 32 du moteur thermique et/ou une consigne d'accélération aux moyens de commande 34 du moteur électrique afin de faire correspondre la vitesse de rotation des arbres de sortie 14 et 16. Lorsque ces vitesses de rotation sont sensiblement égales les moyens 30 de supervision transmettent aux moyens 28 d'embrayage et débrayage une consigne de changement d'état afin d'obtenir l'accouplement du moteur thermique à la transmission 18.

Lors de la phase 3, les moyens de commande 30 reçoivent la consigne d'accélération et en fonction de la vitesse du véhicule ajustent la consigne d'accélération transmise aux moyens 34 de commande du moteur électrique et la consigne d'accélération transmise aux moyens 32 de commande du moteur thermique pour obtenir une vitesse du véhicule conforme à l'accélération souhaitée par l'utilisateur.

Lors de la phase 3, selon une loi de commande, la consigne d'accélération transmise aux moyens 34 de commande du moteur électrique est complémentaire à la consigne d'accélération transmise aux moyens 32 de commande du moteur thermique sachant que le couple reçu par la transmission 18 est égal à la somme des couples des arbres 14 et 16.

## Revendications

1. Motorisation hybride à dominante électrique d'un véhicule comprenant un moteur électrique (10) avec un arbre de sortie (14) accouplé à une transmission (18) du véhicule et un moteur thermique (12) avec un arbre de sortie (16) relié grâce à une chaîne cinématique à ladite transmission (18), **caractérisée en ce que** l'arbre (14) de sortie du moteur électrique est couplé de manière permanente à la transmission (18), et **en ce que** ladite motorisation comprend des moyens (28) d'embrayage et de débrayage placés au niveau de la chaîne cinématique reliant l'arbre de sortie (16) du moteur thermique à la transmission (18) aptes à occuper un premier état désaccouplé lorsque la vitesse du véhicule est inférieure à une vitesse seuil Vs de manière à ce que le moteur thermique (12) soit désaccouplé de la transmission (18) et un second état accouplé lorsque la vitesse du véhicule est égale ou supérieure à la vitesse seuil Vs de manière à ce que le moteur thermique (12) soit accouplé à la transmission.

2. Motorisation hybride d'un véhicule selon la revendication 1, **caractérisée en ce qu'**elle comprend des moyens (38) de mesure de la vitesse de rotation de l'arbre de sortie (16) du moteur thermique pour renseigner des moyens (30) de supervision afin de réaliser le changement d'état des moyens (28) lorsque la vitesse de rotation de l'entrée des moyens (28) d'embrayage et de débrayage est sensiblement égale à la vitesse de rotation de la sortie des moyens (28) d'embrayage et de débrayage.

3. Motorisation hybride d'un véhicule selon la revendication 1 ou 2, **caractérisée en ce que** le moteur électrique (10) est de type sans balai.

4. Procédé de gestion d'une motorisation hybride à dominante électrique d'un véhicule comprenant un moteur électrique (10) avec un arbre de sortie (14) accouplé à une transmission (18) du véhicule et un moteur thermique (12) avec un arbre de sortie (16) relié grâce à une chaîne cinématique à ladite transmission (18), **caractérisé en ce que** l'arbre (14) de sortie du moteur électrique est couplé de manière permanente à la transmission (18), et **en ce que** ledit procédé consiste à maintenir désaccouplé l'arbre de sortie (16) du moteur thermique et la transmission (18) lorsque la vitesse du véhicule est inférieure à une vitesse seuil Vs et à accoupler l'arbre de sortie (16) du moteur thermique et la transmission (18) lorsque la vitesse du véhicule est égale ou supérieure à la vitesse seuil Vs.

5. Procédé de gestion d'une motorisation hybride selon la revendication 4, **caractérisé en ce qu'**il consiste à utiliser des moyens (28) d'embrayage et de débrayage intercalés au niveau de la chaîne cinématique reliant l'arbre de sortie (16) du moteur thermique et la transmission (18) et à ajuster les vitesses de rotation des moteurs thermique et électrique afin que la vitesse de rotation de l'entrée desdits moyens (28) d'embrayage et de débrayage soit sensiblement égale à la vitesse de rotation de la sortie desdits moyens (28) d'embrayage et de débrayage.

6. Procédé de gestion d'une motorisation hybride selon la revendication 5, **caractérisé en ce qu'**il consiste à mesurer la vitesse de rotation réelle de l'arbre de sortie (16) du moteur thermique.

7. Procédé de gestion d'une motorisation hybride selon l'une quelconque des revendications 4 à 6, **caractérisé en ce qu'**il consiste à ne plus alimenter le moteur électrique lorsque la vitesse du véhicule dépasse une vitesse haute Vh de manière à ce que la transmission (18) soit entraînée uniquement par le moteur thermique (12).

8. Procédé de gestion d'une motorisation hybride selon l'une quelconque des revendications 4 à 7, **caractérisé en ce que** le moteur thermique est à l'arrêt lorsque la vitesse du véhicule est inférieure à une vitesse minimale Vmin inférieure à Vs.
